# EUROPEAN PATENT SPECIFICATION

(11) **EP 1 461 197 B1**
(45) Date of publication and mention of the grant of the patent: **09.08.2006**
(21) Application number: 02776192.3
(22) Date of filing: 09.10.2002
(51) Int. Cl.: B29C 47/10, C08F 8/00

(54) **OXYGEN TAILORING OF POLYETHYLENE RESINS**
SAUERSTOFFEINSTELLUNG FÜR POLYETHYLENHARZE
INDIVIDUALISATION PAR OXYGENE DE RESINES DE POLYETHYLENE

(30) Priority: 30.11.2001 US 334563 P; 29.08.2002 US 406706 P
(43) Date of publication of application: 29.09.2004
(73) Proprietor: Univation Technologies, LLC, Houston, TX 77056 (US)
(72) Inventor: SCHREGENBERGER, Sandra, D., Hillsborough, NJ 08844 (US); LOTTES, James, F., Radnor, PA 19087 (US); SHIRODKAR, Pradeep, P., Kingwood, TX 77345 (US); SHANNON, Porter, C., Seabrook, TX 77586 (US)
(74) Representative: Dörries, Hans Ulrich
(86) International application number: PCT/US2002/032243
(87) International publication number: WO 2003/047839

(56) References cited:
- EP-A- 0 180 444
- EP-A- 0 728 796
- WO-A-96/09328
- FR-A- 2 251 576
- GB-A- 1 201 060
- US-A- 4 029 877
- US-A- 5 284 613
- US-A- 5 539 076
- US-A- 5 578 682
- US-A- 5 728 335
- US-A- 6 147 167
- US-B1- 6 454 976

## Description

### 1. FIELD OF THE INVENTION

The present invention is directed to methods of extruding polyethylene homopolymer and copolymer resins. More particularly, the invention provides methods of oxygen tailoring polyethylene resins to improve the bubble stability and gauge uniformity of films made from such resins.

### 2. BACKGROUND

Tailoring of resins, such as polyethylene homopolymer or copolymer resins, is a well-known method of altering the molecular architecture and thus the bulk properties of the resin and of films and articles made therefrom. Tailoring involves treating the resin with an agent, such as a peroxide or oxygen, capable of controlled degradation of the resin. The effect of tailoring on the resin rheological properties can be seen in an increase in shear thinning behavior, an increase in elasticity, an increase in melt tension, a reduction in swelling during blow molding, and an increase in bubble stability during film blowing. Although not wishing to be bound by theory, it is believed that an effect of tailoring is to introduce low levels of long chain branching in the resin.

Polyolefin resins having bimodal molecular weight distributions and/or bimodal composition distributions are desirable in a number of applications. Resins including a mixture of a relatively higher molecular weight polyolefin and a relatively lower molecular weight polyolefin can be produced to take advantage of the increased strength properties of higher molecular weight resins and articles and films made therefrom, and the better processing characteristics of lower molecular weight resins.

Bimodal resins can be produced in tandem reactors, such as tandem gas phase reactors or tandem slurry reactors. Alternatively, bimetallic catalysts such as those disclosed in U.S. Patent Nos. 5,032,562 and 5,525,678, and European Patent EP 0 729 387, can produce bimodal polyolefin resins in a single reactor. These catalysts typically include a non-metallocene catalyst component and a metallocene catalyst component which produce polyolefins having different average molecular weights. U.S. Patent No. 5,525,678, for example, discloses a bimetallic catalyst in one embodiment including a titanium non-metallocene component which produces a higher molecular weight resin, and a zirconium metallocene component which produces a lower molecular weight resin. Controlling the relative amounts of each catalyst in a reactor, or the relative reactivities of the different catalysts, allows control of the bimodal product resin.

A particularly useful application for bimodal polyethylene resins is in films. Frequently, however, the bubble stability and gauge uniformity of medium density polyethylene (MDPE) resins and high density polyethylene (HDPE) resins are not adequate for producing thin films. Attempts have been made to tailor polyethylene resins to improve bubble stability, gauge uniformity, and/or otherwise improve resin or film properties; *see, e.g.,* European Patent Publication No. EP 0 457 441, and U.S. Patent Nos. 5,728,335; 5,739,266; and 6,147,167. FR-A-2 251 576 discloses an improved process for preparing polyolefins derived from olefins having three or more carbon atoms, said polyolefins having a predefined critical rheology, which process comprises injecting under pressure certain quantities of oxygen in an inert gas at defined temperatures into a closed chamber in which the polymer is in a molten state. EP 0 936 049 A2 discloses a process for the extrusion of broad molecular weight distribution polyethylene wherein the polyethylene is prepared in pellet form, said extrusion taking place in a pelletizing extruder having one or more zones essentially filled with polyethylene and two or more zones partially filled with polyethylene including a feed zone. Other background references include EP 0 180 444; U.S. 5,578,682; EP 0 728 796; and GB 1,201,060. However, it would be desirable to have improved methods of extruding polyethylene, particularly pelletized bimodal polyethylene film resin, to provide resins having improved bubble stability and gauge uniformity when processed into film.

### 3. SUMMARY OF THE INVENTION

In one aspect, the present invention provides a process for extruding a bimodal polyethylene resin. The process includes providing a polyethylene homopolymer or copolymer resin having a bimodal molecular weight distribution; conveying the resin through an extruder having a feed zone in which the resin is not melted, a melt-mixing zone in which at least a portion of the resin is melted, and a melt zone in which the resin is in a molten state, each zone being partially filled with the resin; and contacting the molten resin in the melt zone with a gas mixture of 8 to 40 % by volume O₂. The resin can further be pelletized. In a particular embodiment, the pelletized, oxygen-treated resin is used to make a polyethylene film, the film having improved bubble stability and gauge uniformity.

In another aspect, the invention provides a process for producing a pelletized polyethylene film resin having a bimodal molecular weight distribution, the process including contacting ethylene under polymerization conditions with a supported bimetallic catalyst to produce a granular polyethylene resin having a bimodal molecular weight distribution; conveying the resin through an extruder having a feed zone in which the resin is not melted, a melt-mixing zone in which at least a portion of the resin is melted, and a melt zone in which the resin is in a molten state, each zone being partially filled with the resin; contacting the molten resin in the melt zone with a gas mixture of 8 to 40 % by volume O₂; and pelletizing the oxygen-treated resin to form the pelletized polyethylene film resin.

Further details of the invention are defined in the dependent claims.

### 4. BRIEF DESCRIPTION OF THE DRAWINGS

Figure 1 is a schematic diagram of a Kobe mixer.
Figure 2 is a schematic diagram of a Farrel mixer.

### 5. DETAILED DESCRIPTION

The polyethylene resin preferably is a medium density polyethylene (MDPE), *i*.*e*., a polyethylene having a density typically in the range of 0.930 g/cm³ to 0.945 g/cm³; or a high density polyethylene (HDPEs), *i*.*e*., a polyethylene having a density greater than 0.945 g/cm³ and up to 0.970 g/cm³. The polyethylene can be a homopolymer or a copolymer, with polymers having more than two types of monomers, such as terpolymers, also included within the term "copolymer" as used herein. Suitable comonomers include α-olefins, such as C₃-C₂₀ α-olefins or C₃-C₁₂ α-olefins. The α-olefin comonomer can be linear or branched, and two or more comonomers can be used, if desired. Examples of suitable comonomers include linear C₃-C₁₂ α-olefins, and α-olefins having one or more C₁-C₃ alkyl branches, or an aryl group. Specific examples include propylene; 3-methyl-1-butene; 3,3-dimethyl-1-butene; 1-pentene; 1-pentene with one or more methyl, ethyl or propyl substituents; 1-hexene with one or more methyl, ethyl or propyl substituents; 1-heptene with one or more methyl, ethyl or propyl substituents; 1-octene with one or more methyl, ethyl or propyl substituents; 1-nonene with one or more methyl, ethyl or propyl substituents; ethyl, methyl or dimethyl-substituted 1-decene; 1-dodecene; and styrene. It should be appreciated that the list of comonomers above is merely exemplary, and is not intended to be limiting. Preferred comonomers include propylene, 1-butene, 1-pentene, 4-methyl-1-pentene, 1-hexene, 1-octene and styrene.

In a particular embodiment, the polyethylene resin has a bimodal molecular weight distribution and/or a bimodal composition distribution. The resin can be produced in conventional processes, such as single or tandem gas phase fluidized bed reactors, or single or tandem slurry loop or supercritical loop reactors, using any catalyst capable of producing bimodal resins. The catalyst used is not particularly limited, and can include, for example, one or more Ziegler-Natta catalysts and/or metallocene catalysts. Mixtures of catalysts can also be used. In particular, polymerization can be carried out with two or more different catalysts present and actively polymerizing at the same time, in a single reactor. The two or more catalysts can be of different catalyst types, such as a non-metallocene catalyst and a metallocene catalyst, to produce a product resin having desirable properties. The catalysts can be fed to the reactor separately or as a physical mixture, or each catalyst particle can contain more than one catalyst compound. When the catalysts include two catalysts producing polymers of different molecular weight and/or different comonomer content, the polymer product can have a bimodal distribution of molecular weight, comonomer, or both. Such bimodal products can have physical properties that are different from those that can be obtained from either catalyst alone, or from post-reactor mixing of the individual unimodal resins obtained from each catalyst alone.

For example, U.S. Patent No. 5,525,678 discloses a catalyst including a zirconium metallocene that produces a relatively low molecular weight, high comonomer-content polymer, and a titanium non-metallocene that produces a relatively high molecular weight, low comonomer-content polymer. Typically, ethylene is the primary monomer, and small amounts of hexene or other alpha-olefins are added to lower the density of the polyethylene. The zirconium catalyst incorporates most of the comonomer and hydrogen, so that, in a typical example, about 85% of the hexene and 92% of the hydrogen are in the low molecular weight polymer. Water is added to control the overall molecular weight by controlling the activity of the zirconium catalyst.

Other examples of suitable catalysts include Zr/Ti catalysts disclosed in U.S. Patent No. 4,554,265; mixed chromium catalysts disclosed in U.S. Patent Nos. 5,155,079 and 5,198,399; Zr/V and Ti/V catalysts disclosed in U.S. Patent Nos.5,395,540 and 5,405,817; the hafnium/bulky ligand metallocene mixed catalysts disclosed in U.S. Patent No. 6,271,323; and the mixed metallocene catalysts disclosed in U.S. Patent No. 6,207,606.

Typically, preferred bimodal resins include a narrow molecular weight distribution low molecular weight (LMW) component produced by the metallocene catalyst and having a melt index I_{21.6} of 100 to 1000 dg/min, and a high molecular weight (HMW) component produced by the non-metallocene catalyst and having a flow index I_{21.6} of 0.1 to 1 dg/min. The relative weight fraction of the HMW and LMW components can be from about 1:9 to about 9:1. A typical resin has a HMW weight fraction of about 60% and a flow index of about 6.

The bimodal resin is processed in a mixer, such as a co- or counter-rotating, intermeshing or non-intermeshing twin screw mixer. Such mixers are well-known in the art, and are commercially available from various sources, such as Kobe and Farrel. The resin is fed to the feeding zone of the mixer, where the temperature is below the melting temperature of the resin as the resin is compressed and conveyed toward the melt-mixing zone. Typically, the temperature in the feeding zone is 20 to 100 °C, and is maintained by cooling the extruder walls. In the melt-mixing zone, the temperature is increased to at least partially melt the resin. In the melt zone, the temperature is sufficient to melt essentially all of the resin, to provide a molten polyethylene resin. Each zone is only partially filled with the resin; *i*.*e*., there are no completely filled zones. Although the terms "mixer" and "extruder" are often used loosely and interchangeably, one skilled in the art will appreciate that mixers, such as the commercially available Kobe or Farrel mixers, operate at relatively low pressures, typically about 100 psi or less, and the zones within the mixer are generally not completely filled with resin. In contrast, extruders, such as are commercially available from, for example, Werner-Pfleiderer, operate at much higher pressures, typically at least several hundred or several thousand psi, and the various zones within the extruder are generally completely filled with resin.

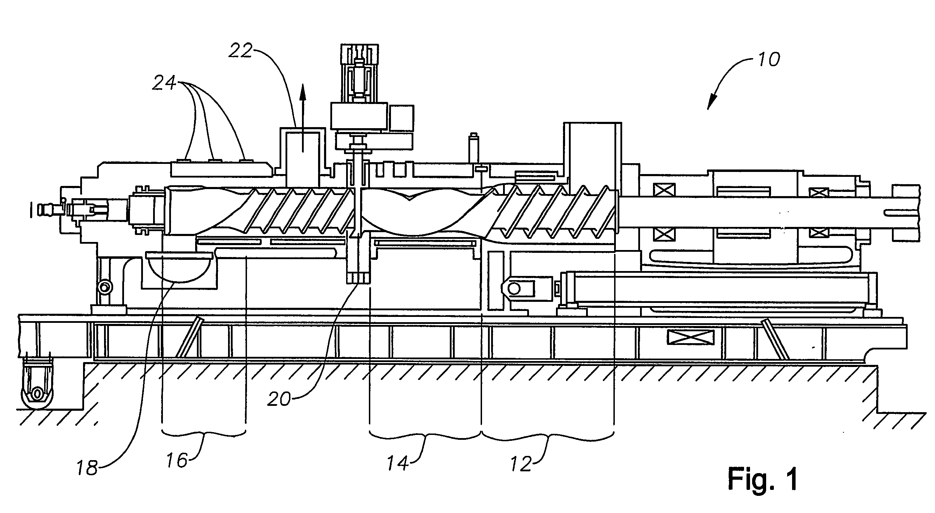

Although not limited to any particular mixer, a process of the invention is illustrated now by specific reference to Figure 1, showing a schematic diagram of a Kobe mixer 10. Mixer 10 includes a feed zone 12, a mixing zone 14, and a melt-conveying zone 16. Resin and optional additives are provided to mixer 10 in the feed zone 12, and the resin is conveyed in a downstream direction through the mixing zone 14 and the melt-conveying zone 16. Gate 20 separates the mixing zone 14 from the melt-conveying zone 16. An optional vent 22 is shown in Figure 1 in the melt-conveying zone 16. As described above, the resin is generally at least partially melted in mixing zone 14, and generally, but not necessarily, essentially completely melted in melt-conveying zone 16. The resin is conveyed through the mixer discharge 18 and further processed, such as by pelletizing.

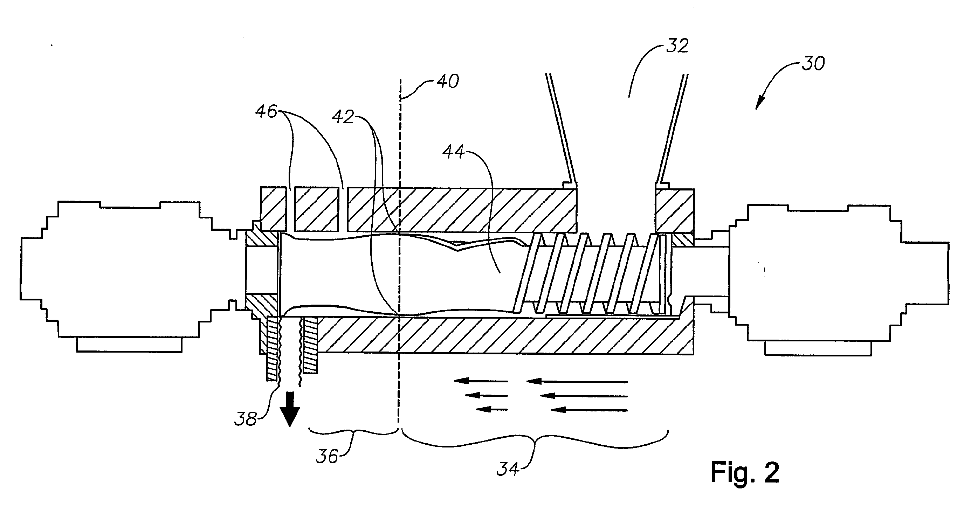

Turning now to Figure 2, specific reference is made to a Farrel mixer 30. Mixer 30 includes a feed zone 32, a mixing zone 34, and a melt-conveying zone 36. Resin and optional additives are provided to mixer 30 in the feed zone 32, and the resin is conveyed in a downstream direction through the mixing zone 34 and the melt-conveying zone 36. As described above, the resin is generally at least partially melted in mixing zone 34, and generally, but not necessarily, essentially completely melted in melt-conveying zone 36. The resin is conveyed through the mixer discharge 38 and further processed, such as by pelletizing. The Farrel mixer does not have a gate such as gate 20 of the Kobe mixer separating the mixing zone from the melt-conveying zone. However, mixing zone 34 and melt-conveying zone 36 are effectively separated by a narrow clearance region shown by dashed line 40 corresponding to the apex 42 of mixing element 44. An optional dam (not shown) can be inserted between mixing zone 34 and melt-conveying zone 36 at the position of line 40.

The resin can be processed at a melt temperature of from a lower limit of 220 °F (104 °C) or 240 °F (116 °C) or 260 °F (127 °C) or 280 °F (138 °C) or 300 °F (149 °C) to an upper limit of less than 430 °F (221 °C) or less than 420 °F (216 °C) or less than 410 °F (210 °C) or less than 400 °F (204 °C), where the melt temperature is the temperature at the downstream end of the mixing zone. For example, in Figure 1, the melt temperature is the temperature at gate 20, and in Figure 2, the melt temperature is the temperature at the apex 42.

It should be appreciated that mixers other than the Kobe and Farrel mixers illustrated herein can be used.

The resin is contacted with oxygen in the melt-conveying zone. The oxygen can be provided, for example, through one or more gas inlet ports. Referring to Figure 1, for example, in some embodiments, oxygen can be provided through one or more inlets 24. Referring to Figure 2, for example, in some embodiments, oxygen can be provided through one or more inlets 46. It should be appreciated that these specific inlet positions are merely exemplary.

Oxygen can be provided as a continuous flow of gas or, alternatively, oxygen can be provided intermittently.

Oxygen gas can be provided as an essentially pure gas, or as part of a gas mixture, such as air. The oxygen can be provided in a pre-mixed gas mixture, or co-fed to the extruder with a diluent gas, adjusting the amount of oxygen in the resulting mixture by adjusting relative oxygen/diluent gas flow rates. For example, oxygen and nitrogen can be fed to the extruder at separately metered flow rates to provide oxygen to the extruder at the desired concentration.

After the oxygen treatment, or "tailoring", the resin can be extruded through a die and pelletized and cooled, or can be directly extruded without pelletization to form a film, such as by a cast or blown film process.

Various additives can also be introduced into the extruder, as is conventional in the art.

### 6. EXAMPLES

Film gauge was measured according to ASTM D374-94 Method C.

Film gauge variation was determined using a Measuretech Series 200 instrument. This instrument measures film thickness using a capacitance gauge. For each film sample, ten film thickness datapoints are measured per inch of film as the film is passed through the gauge in a transverse direction. Three film samples were used to determine the gauge variation. The gauge variation was determined by dividing the full range of film thickness (maximum minus minimum) by the average thickness, and dividing the result by two. The gauge variation is presented as a percentage change around the average.

Dart Drop Impact values were measured using the procedures in ASTM D1709-98 Method A, except that the film gauge was measured according to ASTM D374-94 Method C.

Elmendorf Tear strength (machine direction, "MD", and transverse direction, "TD") were measured using the procedures in ASTM D1922-94a, except that the film gauge was measured according to ASTM D374-94 Method C.

The term "Melt Index" refers to the melt flow rate of the resin measured according to ASTM D-1238, condition E (190 °C, 2.16 kg load), and is conventionally designated as I_{2.16}. The term "Flow Index" refers to the melt flow rate of the resin measured according to ASTM D-1238, condition F (190 °C, 21.6 kg load), and is conventionally designated as I_{21.6}. Melt index and flow index have units of g/10 min, or equivalently dg/min. The term "MFR" refers to the ratio I_{21.6}/I_{2.16}, and is dimensionless.

Specific Energy Input (SEI) refers to the energy input to the main drive of the extruder, per unit weight of melt processed resin, and is expressed in units of hp·hr/lb or kW·hr/kg.

"Elasticity" as used herein is the ratio of G' to G" at a frequency of 0.1 s⁻¹, where G' and G" are the storage (or elastic) and loss (or viscous) moduli, respectively. G' and G" were measured according to ASTM D-4440-84. Measurements were made at 200 °C using a Rheometrics RMS 800 oscillatory rheometer.

Density (g/cm³) was determined using chips cut from plaques compression molded in accordance with ASTM D-1928-96 Procedure C, aged in accordance with ASTM D618 Procedure A, and measured according to ASTM D1505-96.

In some examples, "Bubble Stability" was determined visually and qualitatively, and is designated as poor, good, etc. In examples wherein "Bubble Stability" is given a numerical value, the bubble stability was determined as the maximum linespeed obtainable before the onset of instability was observed, as evidenced by vertical or horizontal oscillations at a blowup ratio (BUR) of 4:1.

Oxygen was provided in an oxygen-nitrogen gas mixture. The oxygen level was controlled by varying the relative flows of oxygen and nitrogen. The oxygen level reported in the data tables was calculated from the volumetric flow rates of air and nitrogen.

The data tables do not include film properties for the base (untailored) resin, since it is usually not possible to fabricate film (i.e., develop a stable bubble) out of the untailored resin. As such, no attempt was made to compound granular resin under non-tailored conditions and run it on the Alpine film line used in the following examples.

### Examples 1-4

A medium density polyethylene (MDPE) bimodal resin was produced using a bimetallic catalyst in a single gas phase fluidized-bed reactor. The bimetallic catalyst was a Ziegler-Natta/Metallocene catalyst as described in U.S. Patent No. 6,403,181. The resin had a density of 0.938 g/cm³, a melt index I_{2.16} of 0.07 dg/min, a flow index I_{21.6} of 6.42 dg/min, and an MFR (I_{21.6}/I_{2.16}) of 92. Oxygen tailoring of the bimodal resin was carried out on a 4 inch (10 cm) diameter Farrel 4LMSD compounder. The Farrel 4LMSD compounder has a 5 L/D rotor. Referring now to Figure 2, an oxygen/nitrogen gas mixture (21 % O₂ by volume) was added at a flow rate of 10 standard ft³/hr (0.3 m³/hr) in the melt-conveying zone 36 at 0.5 L/D from the end of the rotor. Optionally, a flow dam can be inserted at about 1.0 L/D 40 from the machine discharge end, and oxygen is injected after the flow dam in the melt conveying zone 36. Several samples of resin were thus processed at different melt temperatures.

Monolayer blown films were produced from the tailored resins on a 50 mm Alpine film line with a 100 mm die and 1 mm die gap, at a rate of 120 lb/hr (54 kg/hr), a blow up ratio (BUR) of 4:1, and a 28 inch frost height. These Examples are summarized in Table 1.

**Table 1**

| Base Resin | | Example No. | | | |
|---|---|---|---|---|---|
| | | 1 | 2 | 3 | 4 |
| Compounding Conditions | | | | | |
| SEI,^{(a)} actual (hp·hr/lb, | | 0.112, | 0.119, | 0.125, | 0.137, |
| kW·hr/kg) | | 0.184 | 0.196 | 0.206 | 0.225 |
| O₂ level (volume %) | | 21 | 21 | 21 | 21 |
| Melt T (°C) | | 239 | 241 | 243 | 268 |

| Resin Characteristics | | | | | |
|---|---|---|---|---|---|
| Flow Index, I_{21.6} (dg/min) | 6.42 | 5.54 | 5.57 | 5.61 | 5.14 |
| Melt Index, I_{2.16} (dg/min) | 0.07 | 0.061 | 0.055 | 0.056 | 0.046 |
| MFR, I_{21.6}/I_{2.16} | 92 | 91 | 101 | 100 | 112 |

| Rheology | | | | | |
|---|---|---|---|---|---|
| Elasticity^{(b)} at 0.1s⁻¹ | 0.51 | 0.61 | 0.64 | 0.66 | 0.74 |
| Increase in Elasticity (%) | | 20 | 26 | 31 | 47 |

| Processability | | | | | |
|---|---|---|---|---|---|
| Melt Pressure | | 7590, | 7760, | 7760, | 8020, |
| (psi, MPa) | | 52.3 | 53.5 | 53.5 | 55.3 |
| Bubble Stability at 0.5 mil | | poor | some | good | good |
| [13µm] | | | vert.^{(c)} | | |

| Film Properties | | | | | |
|---|---|---|---|---|---|
| 1 mil (25 µm) Gauge | | | | | |
| Dart Drop Impact (g, g/mil, | | 473, | 482, | 527, | 479, |
| g/µm) | | 473, | 482, | 527, | 479, |
| | | 18.6 | 19.0 | 20.7 | 18.9 |
| Elmendorf Tear, MD (g/mil, g/µm) | | 33, 1.3 | 32, 1.3 | 32, 1.3 | 32, 1.3 |
| Elmendorf Tear, | | 338, | 304, | 258, | 211, |
| TD (g/mil, g/µm) | | 13.3 | 12.4 | 10.2 | 8.31 |

| 0.5 mil (13µm) Gauge | | | | | |
|---|---|---|---|---|---|
| Dart Drop Impact (g, g/mil, | | 449, | 548, | 518, | 401, |
| g/µm) | | 898, | 1096, | 1036, | 802, |
| | | 35.4 | 43.1 | 40.8 | 31.6 |
| Elmendorf Tear, | | 18, | 25, | 23, | 28, |
| MD (g/mil, g/µm) | | 0.71 | 0.98 | 0.91 | 1.1 |
| Elmendorf Tear, | | 203, | 128, | 130, | 110, |
| TD (g/mil, g/µm) | | 7.99 | 5.04 | 5.12 | 4.33 |

| | | | | | |
|---|---|---|---|---|---|
| ^{(a)} Specific Energy Input; ^{(b)} G'/G"; ^{(c)} some vertical oscillations observed | | | | | |

As the degree of oxygen tailoring increases, as measured by an increase in specific energy input (SEI), the bubble stability of the resin improves. The change in resin characteristics as a result of oxygen tailoring is reflected in the increase in elasticity of up to 47 percent. It is surprising that with the use of a very high level of oxygen (21 volume %), an excellent balance of bubble stability and film properties is achieved.

### Examples 5-9

A high density polyethylene (HDPE) bimodal resin was produced using a bimetallic catalyst in a single gas phase fluidized-bed reactor. The bimetallic catalyst was a Ziegler-Natta/Metallocene catalyst as described in U.S. Patent No. 6,403,181. The resin had a density of 0.946 g/cm³, a melt index I_{2.16} of 0.066 dg/min, a flow index I_{21.6} of 5.81 dg/min, and an MFR (I_{21.6}/I_{2.16}) of 88. Oxygen tailoring of the bimodal resin was carried out as described above. Several samples of resin were thus processed at different melt temperatures. Monolayer cast films were produced from the tailored resins as described above. These Examples are summarized in Table 2.

**Table 2**

| Base Resin | | Example No. | | | | |
|---|---|---|---|---|---|---|
| | | 5 | 6 | 7 | 8 | 9 |
| Compounding Conditions | | | | | | |
| Flow Dam at 4th Segment of Mixer | | no | no | No | yes | yes |
| SEI,^{(a)} actual (hp·hr/lb, | | 0.115, | 0.129, | 0.147, | 0.131, | 0.145, |
| kW·hr/kg) | | 0.189 | 0.212 | 0.242 | 0.215 | 0.238 |
| O₂ level (volume %) | | 21 | 21 | 21 | 21 | 21 |
| Melt T (°C) | | 231 | 253 | 281 | 256 | 282 |

| Resin Characteristics | | | | | | |
|---|---|---|---|---|---|---|
| Flow Index, I_{21.6} (dg/min) | 5.81 | 5.69 | 5.46 | 5.33 | 5.52 | 5.38 |
| Melt Index, I_{2.16} (dg/min) | 0.066 | 0.062 | 0.051 | 0.042 | 0.054 | 0.043 |
| MFR, I_{21.6}/I_{2.16} | 88 | 92 | 108 | 127 | 103 | 125 |

| Rheology | | | | | | |
|---|---|---|---|---|---|---|
| Elasticity^{(b)} at 0.1s⁻¹ | 0.52 | 0.54 | 0.69 | 0.76 | 0.67 | 0.79 |
| Increase in Elasticity (%) | | 4 | 33 | 46 | 29 | 51 |

| Processability | | | | | | |
|---|---|---|---|---|---|---|
| Melt Pressure | | 6500, | 6450, | 6400, | 6300, | 6250, |
| (psi, MPa) | | 44.8 | 44.5 | 44.1 | 43.4 | 43.1 |
| Bubble Stability^{(c)} | | <200, | 280, | >300, | >300, | >300, |
| (ft/min, m/s) | | <1.0 | 1.4 | >1.5 | >1.5 | >1.5 |

| Film Properties | | | | | | |
|---|---|---|---|---|---|---|
| Dart Drop Impact, 1 mil | | 270, | 350, | 345, | 300, | 315, |
| [25µm] | | 270, | 350, | 345, | 300, | 315, |
| (g, g/mil, g/µm) | | 10.6 | 13.8 | 13.6 | 11.8 | 12.4 |
| Dart Drop Impact, 0.5 mil [13 | | 410, | 420, | 360, | 390, | 270, |
| µm] | | 820, | 840, | 720, | 780, | 540, |
| (g, g/mil, g/µm) | | 32.3 | 33.1 | 28.3 | 30.7 | 21.3 |

| | | | | | | |
|---|---|---|---|---|---|---|
| ^{(a)} Specific Energy Input | | | | | | |
| ^{(b)} G'/G" | | | | | | |
| ^{(c)} maximum linespeed achieved before onset of instability | | | | | | |

As the severity of tailoring, as measured by SEI or by melt temperature, increased, the bubble stability as measured by maximum linespeed increased. The presence of a flow dam also increased tailoring. It was surprisingly found that even with use of a high level of oxygen (21 volume %), a balance of bubble stability (maximum linespeed greater than 300 ft/min (1.5 m/s)) and properties was achieved.

### Examples 10-12C

A high density polyethylene (HDPE) bimodal resin was produced using a bimetallic catalyst in a single gas phase fluidized-bed reactor. The bimetallic catalyst was a Ziegler-Natta/Metallocene catalyst as described in U.S. Patent No. 6,403,181. Oxygen tailoring of the bimodal resin was carried out as described above.

ExxonMobil HD-7755 was used as a comparative resin (Example 12C). ExxonMobil HD-7755 is a bimodal ethylene copolymer produced in a series tandem reactor. ExxonMobil HD-7755 has a density of 0.952 g/cm³, a melt index I_{2.16} of 0.055 dg/min, and a flow index I_{21.6} of 9 dg/min. ExxonMobil HD-7755 is available from ExxonMobil Chemical Company, Houston, TX. This example is summarized in Table 3.

Monolayer blown films were produced from the tailored resins on a 50 mm Alpine film line with a 120 mm monolayer die and nominal 1.2 mm die gap at a rate of 200 lb/hr (90.7 kg/hr), a blow up ratio (BUR) of 4:1, and a 48-52 inch (122-132 cm) frost height. These Examples are summarized in Table 3.

**Table 3**

| Base Resin^{(a)} | | Example No. | | |
|---|---|---|---|---|
| | | 10 | 11 | 12C |
| Compounding Conditions | | | | |
| SEI,^{(b)} actual (kW·hr/kg) | | 0.176 | 0.181 | |
| O₂ level (volume %) | | 9.1 | 9.2 | |
| Mixer Metal T (°C) | | 266 | 277 | |
| Rate (10³kg/hr) | | 25 | 25 | |
| Barrel Pulse Water Cooling | | Off | On | |

| Resin Characteristics | | | | |
|---|---|---|---|---|
| Flow Index, I_{21.6} (dg/min) | 6.56 | 6.14 | 6.44 | 14.1 |
| Melt Index, I_{2.16} (dg/min) | 0.083 | | | |
| MFR, I_{21.6}/I_{2.16} | 84 | 106 | 124 | 186 |
| Density (g/cm³) | | 0.9519 | 0.9512 | 0.951 |

| Rheology | | | | |
|---|---|---|---|---|
| Elasticity^{(c)} at 0.1s⁻¹ | 0.498 | 0.612 | 0.740 | |
| Increase in Elasticity (%) | -- | 23 | 49 | |

| Processability | | | | |
|---|---|---|---|---|
| Melt Pressure | | 7775, | 7610, | 7175, |
| (psi, MPa) | | 53.61 | 52.47 | 49.47 |

| Film Properties | | | | |
|---|---|---|---|---|
| Gauge Variation (%) | | 16 | 11 | 20 |
| Dart Drop Impact (g, g/mil, | | 204, | 169, | 203, |
| g/µm) | | 408, | 338, | 406, |
| | | 16.1 | 13.3 | 16.0 |
| Elmendorf Tear, | | 11, | 11, | 11, |
| MD (g/mil, g/µm) | | 0.43 | 0.43 | 0.43 |

| | | | | |
|---|---|---|---|---|
| ^{(a)} Values represent the average of two samples | | | | |
| ^{(b)} Specific Energy Input | | | | |
| ^{(c)} G'/G" | | | | |

## Claims

1. A process for extruding a bimodal polyethylene resin, the process comprising:
(a) providing a polyethylene homopolymer or copolymer resin having a bimodal molecular weight distribution;
(b) conveying the resin through an extruder having a feed zone in which the resin is not melted, a melt-mixing zone in which at least a portion of the resin is melted, and a melt zone in which the resin is in a molten state, each zone being partially filled with the resin; and
(c) contacting the molten resin in the melt zone with a gas mixture comprising 8 to 40 % by volume O₂;
wherein step (a) comprises contacting monomers comprising ethylene under polymerization conditions with a supported bimetallic catalyst to produce a polyethylene resin having a bimodal molecular weight distribution.

2. The process of claim 1, further comprising after step (c) pelletizing the oxygen-treated resin.

3. The process of claims 1 or 2, wherein the monomers comprise ethylene and at least one C₃-C₁₂ alpha olefin.

4. The process of claims 1 or 2, wherein the bimodal polyethylene resin has a density of at least 0.93 g/cm³ or of at least 0.945 g/cm³.

5. The process of claims 1 or 2, wherein the bimodal polyethylene resin has a density of from 0.93 to 0.97 g/cm³.

6. The process of claims 1 or 2, wherein the gas mixture comprises 10 to 35 % by volume O₂, preferably 15 to 25 % by volume O₂.

7. The process of claims 1 or 2, wherein the supported bimetallic catalyst comprises a non-metallocene transition metal catalyst and a metallocene transition metal catalyst.

8. A pelletized polyethylene film resin having a bimodal molecular weight distribution produced according to the process of claim 2.

9. A polyethylene film made of the pelletized polyethylene film resin of claim 8.

## Patentansprüche

1. Verfahren zum Extrudieren eines bimodalen Polyethylen-Harzes, wobei das Verfahren Folgendes umfasst:
(a) Bereitstellen eines Polyethylen Homopolymer- oder Copolymer-Harzes mit einer bimodalen Molekulargewichtsverteilung;
(b) Befördern des Harzes durch einen Extruder, der einen Füllbereich, in dem das Harz nicht geschmolzen ist, einen Schmelz-Misch-Bereich, in dem zumindest ein Teil des Harzes geschmolzen ist, und einem Schmelzbereich, in dem das Harz sich in einem geschmolzenen Zustand befindet, aufweist, wobei jeder Bereich teilweise mit dem Harz gefüllt ist; und
(c) In-Kontakt-Bringen des geschmolzenen Harzes im Schmelzbereich mit einem Gasgemisch, das 8 bis 40 vol-% O₂ umfasst;
wobei Schritt (a) das In-Kontakt-Bringen von Monomeren, umfassend Ethylen, mit einem geträgerten bimetallischen Katalysator unter Polymerisationsbedingungen umfasst, um ein Polyethylen-Harz mit einer bimodalen Molekulargewichtsverteilung herzustellen.

2. Das Verfahren gemäß Anspruch 1, das nach Schritt (c) zusätzlich das Pellettieren des mit Sauerstoff behandelten Harzes umfasst.

3. Das Verfahren gemäß den Ansprüchen 1 oder 2, wobei die Monomere Ethylen und mindestens ein C₃-bis C₁₂-alpha-Olefin umfassen.

4. Das Verfahren gemäß den Ansprüchen 1 oder 2, wobei das bimodale Polyethylen-Harz eine Dichte von mindestens 0,93 g/cm³ oder von mindestens 0,945 g/cm³ aufweist.

5. Das Verfahren gemäß den Ansprüchen 1 oder 2, wobei das bimodale Polyethylen-Harz eine Dichte von 0,93 bis 0,97 g/cm³ aufweist.

6. Das Verfahren gemäß den Ansprüchen 1 oder 2, wobei das Gasgemisch 10 bis 35 vol-% O₂, vorzugsweise 15 bis 25 vol-% O₂ umfasst.

7. Das Verfahren gemäß den Ansprüchen 1 oder 2, wobei der geträgerte bimetallische Katalysator einen Übergangsmetall-Katalysator, der kein Metallocen ist, und einen Übergangsmetallkatalysator, der ein Metallocen ist, umfasst.

8. Pellettiertes Polyethylenfilm-Harz mit einer bimodalen Molekulargewichtsverteilung, das gemäß dem Verfahren aus Anspruch 2 hergestellt ist.

9. Polyethylenfilm, der aus dem pellettierten Polyethylenfilm-Harz gemäß Anspruch 8 hergestellt ist.

## Revendications

1. Procédé pour extruder une résine de polyéthylène bimodale, ce procédé comprenant les étapes suivantes :
(a) fournir une résine d'homopolymère ou copolymère de polyéthylène ayant une distribution bimodale des poids moléculaires ;
(b) véhiculer la résine à travers une extrudeuse ayant une zone d'alimentation dans laquelle la résine n'est pas fondue, une zone de mélange en masse fondue dans laquelle au moins une partie de la résine est fondue, et une zone de fusion dans laquelle la résine est à l'état fondu, chaque zone étant partiellement remplie de résine ; et
(c) mettre en contact la résine fondue dans la zone de fusion avec un mélange gazeux comprenant 8 à 40 % en volume de O₂ ;
dans lequel l'étape (a) comprend la mise en contact de monomères comprenant de l'éthylène dans des conditions de polymérisation avec un catalyseur bimétallique fixé sur un support pour produire une résine de polyéthylène ayant une distribution bimodale des poids moléculaires.

2. Procédé suivant la revendication 1, comprenant en outre, après l'étape (c), la granulation de la résine traitée à l'oxygène.

3. Procédé suivant la revendication 1 ou 2, dans lequel les monomères comprennent l'éthylène et au moins une alpha-oléfine en C₃ à C₁₂.

4. Procédé suivant la revendication 1 ou 2, dans lequel la résine bimodale de polyéthylène a une densité d'au moins 0,93 g/cm³ ou d'au moins 0,945 g/cm³.

5. Procédé suivant la revendication 1 ou 2, dans lequel la résine bimodale de polyéthylène a une densité de 0,93 à 0,97 g/cm³.

6. Procédé suivant la revendication 1 ou 2, dans lequel le mélange gazeux comprend 10 à 35 % en volume de O₂, de préférence 15 à 25 % en volume de O₂.

7. Procédé suivant la revendication 1 ou 2, dans lequel le catalyseur bimétallique fixé sur un support comprend un catalyseur à base de métal de transition du type non-métallocène, et un catalyseur à base de métal de transition du type métallocène.

8. Résine granulée de polyéthylène pour film, ayant une distribution des poids moléculaires bimodale, produite suivant le procédé de la revendication 2.

9. Film de polyéthylène produit à partir de la résine de polyéthylène granulée pour film de la revendication 8.
